# FASCICULE DE BREVET EUROPEEN

(11) **EP 0 708 723 B1**
(45) Date de publication et mention de la délivrance du brevet: **27.01.1999**
(21) Numéro de dépôt: 94922297.0
(22) Date de dépôt: 22.07.1994
(51) Int. Cl.: B62B 3/10

(54) **CHARIOT EN MATIERE SYNTHETIQUE**
TRANSPORTWAGEN AUS KUNSTSTOFF
TROLLEY MADE OF SYNTHETIC MATERIAL

(30) Priorité: 22.07.1993 FR 9309018
(43) Date de publication de la demande: 01.05.1996
(73) Titulaire: GIAT INDUSTRIES, 78000 Versailles (FR); ICD Holding B.V:, NL-4817 MB Breda (NL)
(72) Inventeur: DESHOURS, Franck, F-78250 Tessancourt (FR); FLOQUET, Christian, F-91300 Massy (FR)
(74) Mandataire: Célanie, Christian
(86) Numéro de dépôt international: FR9400923
(87) Numéro de publication internationale: WO9503201

(56) Documents cités:
- WO-A-93/02903
- WO-A-93/11018
- US-A- 4 632 411

## Description

Le secteur technique de la présente invention est celui des chariots en matière synthétique et leur procédé de réalisation.

On a déjà proposé des chariots en matière plastique dont l'intérêt est de permettre un contrôle automatique de détection électro-magnétique de la présence d'objets dans le chariot.

Le brevet WO-A-9311018 décrit un chariot qui comporte deux parties constituées par un panier et un pied muni de roues. Ces deux parties sont ensuite réunies à l'aide de colle, de vis ou de boulons et cette fixation ne doit pas entraver l'emboîtement des chariots les uns dans les autres lors de leur rangement. Ces deux parties sont réalisées par moulage et le grand inconvénient réside dans le fait qu'on doit utiliser des moules ayant une très grande empreinte surtout pour le panier. Des chariots de ce type sont donc chers à fabriquer en raison du coût des moules et de l'emploi nécessaire de presse à grand débattement. D'autre part, la fixation du panier au pied ne résiste pas suffisamment longtemps aux différents chocs du chariot lors de son utilisation par les utilisateurs.

Le brevet WO-A-9302903 décrit un chariot constitué d'un châssis et d'un panier assemblés l'un à l'autre au moyen de boulons. Le panier et le châssis forment chacun un ensemble d'une seule pièce venue de moulage.

Le brevet US-A- 4 632 411 décrit un chariot constitué lui aussi d'un châssis métallique et un panier en matériau plastique en une seule pièce.

Le but de la présente invention est de fournir un chariot en matière synthétique ne nécessitant pour son assemblage aucun collage et offrant une très grande résistance aux chocs lors de son utilisation.
L'invention a donc pour objet un chariot en matière synthétique comprenant deux flancs latéraux délimitant chacun d'une part une plaque latérale prolongée par une patte de réception d'une barre de manoeuvre, et d'autre part un segment de pied, le panier du chariot étant constitué des plaques latérales proprement dites, d'une plaque frontale, d'une plaque arrière et d'un fond, le pied étant constitué des segments proprement dits et d'une plaque de jonction, caractérisé en ce qu'il comprend :
- des moyens d'assemblage du panier constitués par un ensemble de créneaux et d'encoches alternés pratiqués au niveau des rebords de jonction adjacents des plaques latérales et de la plaque frontale, et des rebords de jonction adjacents du fond et des plaques latérales, les créneaux de chaque rebord adjacent étant munis chacun d'un percement, et par une tige en matière synthétique introduite dans les percements des créneaux alignés des rebords adjacents desdites plaques,
- un moyen de liaison des pattes des flancs latéraux entre elles,
- et un moyen de liaison des segments de pied à la plaque de jonction.

Le fond et la plaque frontale peuvent être reliés par un système constitué d'une réglette engagée dans une rainure.

La réglette peut être solidaire du fond et la rainure de la plaque frontale.

Les créneaux peuvent présenter une longueur équivalente à celle des encoches.

Le moyen de liaison des pattes des flancs latéraux peut être constitué d'une barre de fixation munie à chaque extrémité d'un tenon portant une collerette engagée dans un logement pratiqué dans chaque patte.

La plaque arrière peut être montée rotative par rapport à la barre de fixation.

La plaque arrière peut être munie de deux ergots coopérant avec deux encoches pratiquées dans le fond pour limiter son débattement latéral.

La plaque arrière peut être munie de deux ergots coopérant avec deux encoches pratiquées dans le fond de façon à limiter son débattement vers l'arrière.

Le moyen de liaison des segments de pied à la plaque de jonction peut être constitué par un ensemble de tenons et de mortaises disposé le long de leurs rebords de jonction.

Les tenons peuvent être solidaires des segments de pied et les mortaises de la plaque de jonction.

Un tout premier avantage du chariot en matière synthétique selon l'invention réside dans le fait que le moulage de ses différentes plaques ne nécessite qu'une presse à faible débattement.

Un autre avantage réside dans l'utilisation de moyens mécaniques d'assemblage excluant tout collage et procurant une grande résistance mécanique.

Un autre avantage de l'invention réside dans l'industrialisation du procédé de fabrication.

D'autres avantages et caractéristiques de l'invention seront mieux compris à l'aide du complément de description qui va suivre de modes de réalisation donnés à titre indicatif en relation avec des dessins dans lesquels :
- la figure 1 est une vue éclatée du chariot montrant ses éléments constitutifs,
- la figure 2 réprésente une vue d'un des deux flancs du chariot,
- la figure 3 est une vue de la plaque avant,
- la figure 4 est une vue du fond,
- la figure 5 représente une vue de la plaque de jonction des pieds,
- la figure 6 est une vue de la plaque arrière,
- la figure 7 est une vue de la barre de liaison,
- la figure 8 représente une vue partielle en coupe d'un flanc au niveau des barres de liaison et de manoeuvre,
- la figure 9 représente une vue de dessous de la plaque de jonction montrant l'assemblage.

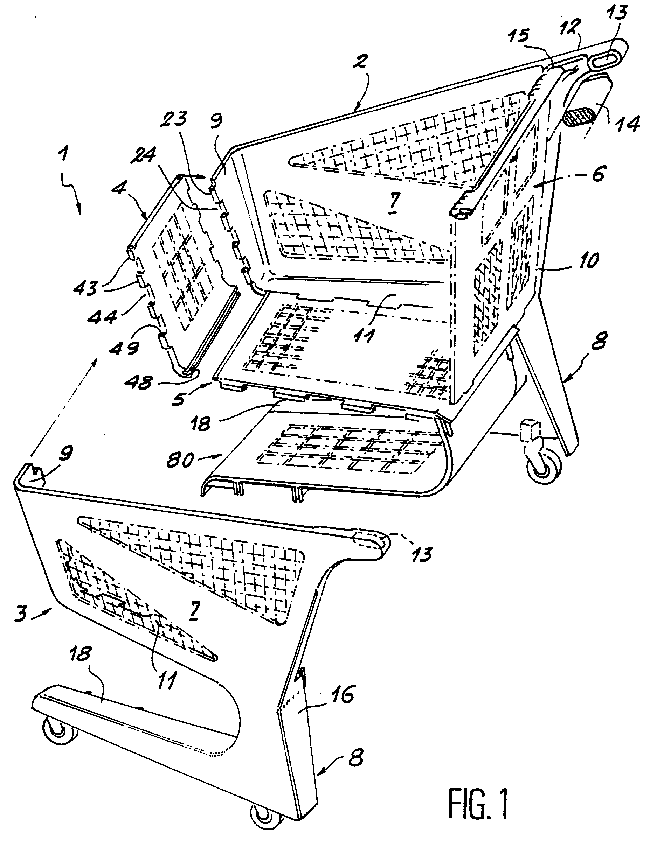

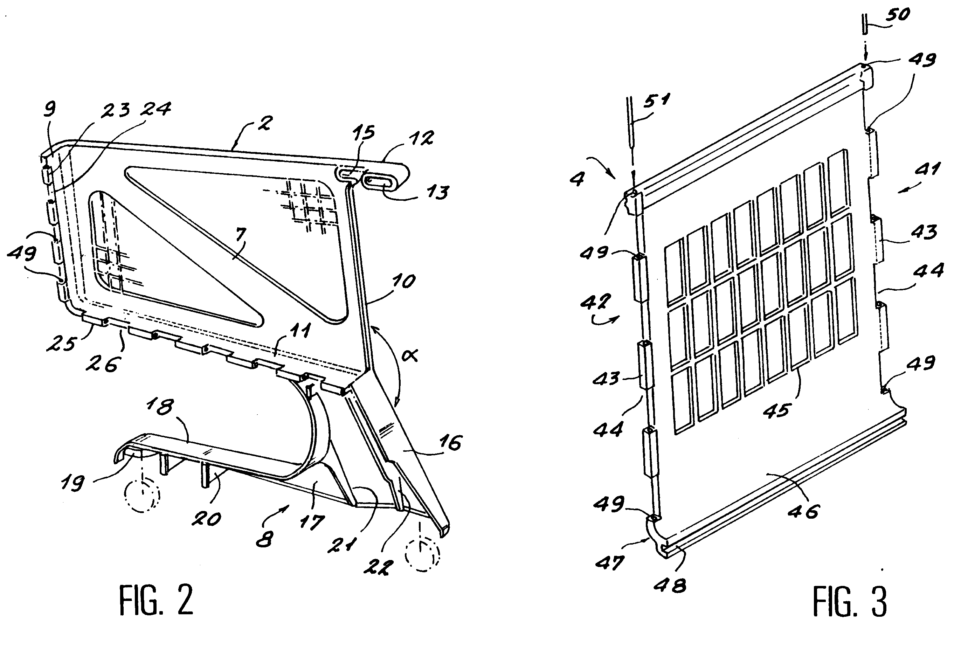

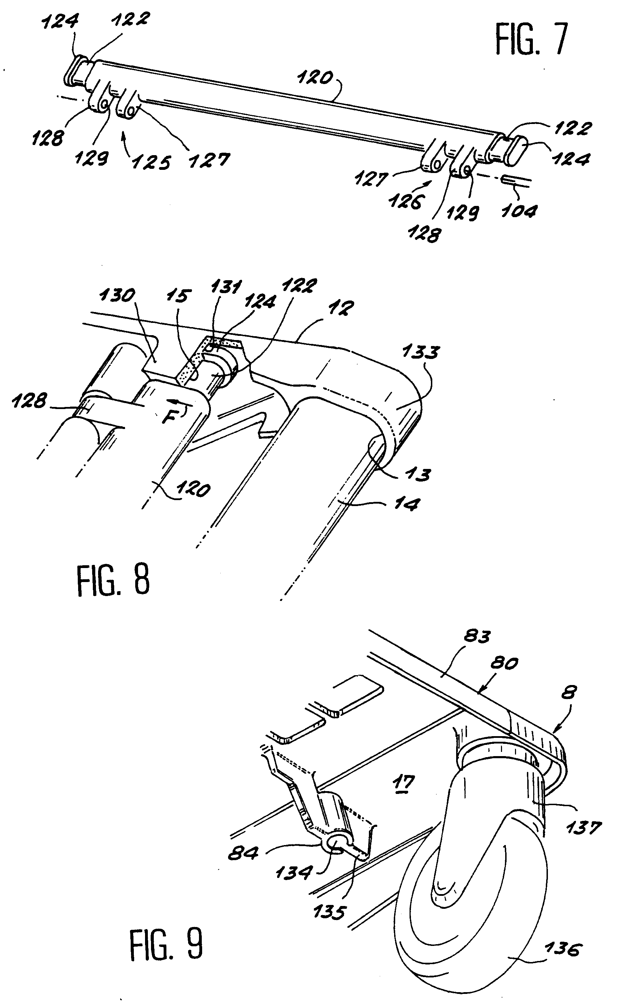

Un chariot 1 suivant l'invention représenté en vue éclatée sur la figure 1, comporte les éléments constitutifs classiques, tel qu'un flanc latéral droit 2, un flanc latéral gauche 3, une plaque frontale 4, un fond 5, une plaque arrière 6. Chaque flanc latéral délimite une plaque latérale 7 et un segment de pied 8. Concrètement, le panier du chariot 1 est délimité par les deux plaques latérales 7, la plaque frontale 4, le fond 5 et la plaque arrière 6. Chaque flanc 2 ou 3 comprend encore un rebord frontal 9, éventuellement un rebord arrière 10, et un rebord de fond 11, rebords qui sont disposés de manière sensiblement perpendiculaire à la surface latérale interne du flanc correspondant. Chaque flanc latéral 1 ou 2, comme montré également sur la figure 2, est prolongé vers le haut et vers l'arrière par une patte 12, présentant un premier logement 13 destiné à recevoir une barre de manoeuvre 14 et un second logement 15 destiné à recevoir le moyen de liaison, décrit plus complètement ci-après en relation avec les figures 7 et 8.

Chaque flanc latéral 2 ou 3 délimite comme indiqué précédemment un segment de pied 8 constitué des parois 16, 17 et 18 qui confèrent à celui-ci la rigidité nécessaire pour absorber les chocs, et autorisent la flexion provoquée par le panier lorsque celui-ci est chargé et pour permettre enfin l'emboîtement des chariots les uns dans les autres lorsque ceux-ci sont rangés. La paroi 16 présente une inclinaison a de l'ordre de 140° par rapport au rebord 10 et prolonge sans discontinuité le rebord 11. La paroi 18 délimite avec la face inférieure du rebord 11, à laquelle elle est raccordée, un U ouvert. Des nervures radiales 19, 20, 21, 22 permettent de rigidifier le segment de pied 8 pour augmenter sa résistance.

Sur la figure 2, le rebord frontal 9 est muni d'un ensemble de créneaux 23 et d'encoches 24 sensiblement de même longueur. Le rebord de fond 11 est également muni de créneaux 25 et d'encoches 26 sensiblement de même longueur.

La vue perspective suivant la figure 3 montre un exemple de réalisation de la plaque frontale 4 du chariot selon l'invention. Dans l'épaisseur de chaque rebord vertical 41 et 42, on pratique des créneaux 43 et des encoches 44 destinés à coopérer respectivement avec les encoches 24 et les créneaux 23 du rebord 9 des flancs latéraux 2 et 3. Cette plaque peut être percée de lumière 45. Le bord inférieur 46 de la plaque 4 présente un léger arrondi 47 et est muni d'une rainure 48 destinée à recevoir le rebord du fond 5 comme cela sera expliqué ci-après plus en détail. On voit encore sur la figure que chaque créneau 43 est muni d'un trou 49, les trous des différents créneaux étant alignés suivant une même génératrice. Il en est de même des créneaux 23 du rebord 9 du flanc 2 ou 3. Ainsi, lorsqu'on assemble les flancs 2 et 3 et la plaque avant 4, les différents créneaux sont réunis à l'aide des tiges 50 et 51 constituant ainsi un assemblage solide résistant aux sollicitations usuelles auquel le chariot est soumis.

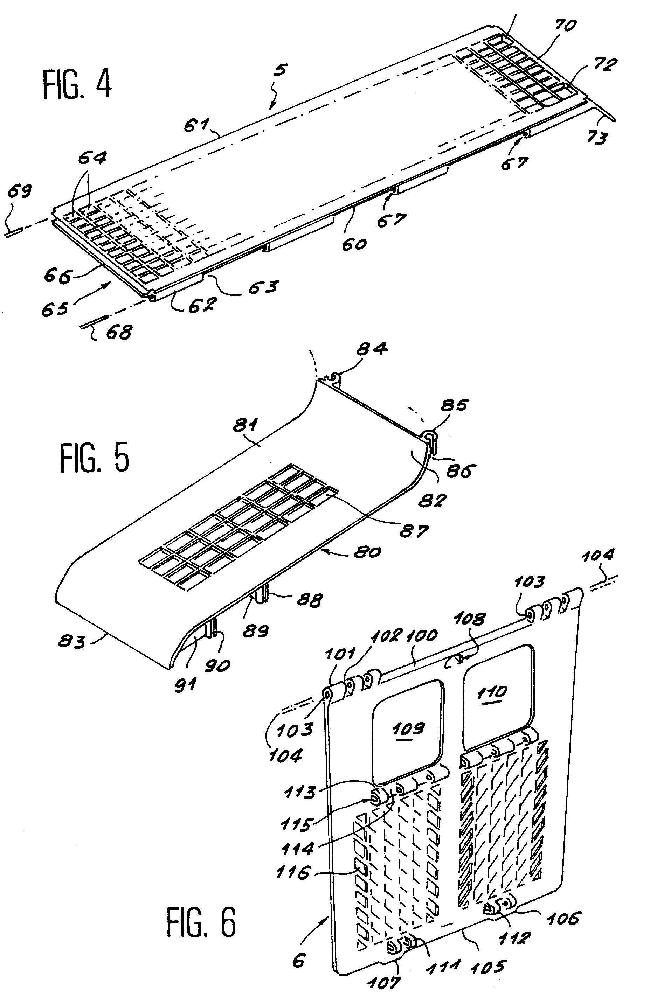

Le fond 5 de panier représenté en perspective sur la figure 4 est une plaque rectangulaire d'une épaisseur d'environ 10 à 20 mm dont les deux longueurs 60 et 61 sont munies de créneaux 62 et d'encoches 63 disposés symétriquement. Le fond peut être muni de lumières 64 facilitant l'écoulement de liquide éventuel. Le bord antérieur 65 est muni d'une feuillure 66 adaptée aux dimensions de la rainure 48 de la plaque 4. Bien entendu, chaque créneau de chaque longueur est muni de trous 67 dont le diamètre est adapté à celui des tiges 68 et 69. Le bord postérieur 70 du fond 5 est muni de deux encoches 71 et 72 destinées à coopérer avec des ergots de la plaque arrière 6 comme il sera expliqué ci-après. Ce rebord 70 est prolongé par une lèvre 73 incurvée vers le bas du chariot.

Les segments de pieds 8 des flancs latéraux 2 et 3 sont réunis par l'embase 80 représentée sur la figure 5 qui se présente sous la forme générale d'une plaque 81 de 2 à 15 mm d'épaisseur environ, terminée par deux becs 82 et 83 de courbure opposée. Le bec 82 présente une courbure dont la concavité est dirigée vers le haut et est terminé par deux mortaises 84 et 85. Chaque mortaise présente une saignée longitudinale 86 dans laquelle est engagée une nervure de renforcement du tenon correspondant du segment de pied. La plaque 81 peut être munie d'ouvertures 87 et supporte deux mortaises 88 opposées, dont une seule est visible, réunies entre elles et à la plaque 81 par une paroi transversale 89 afin d'en parfaire la rigidité. Le bec 83 présente une concavité dirigée vers le bas et comporte deux mortaises 90, dont une seule est visible, reliées chacune à l'extrémité de ce bec par une paroi longitudinale 91.

La plaque arrière 6 représentée sur la figure 6 ne comporte ni créneaux ni encoche et ne participe pas à la rigidité du panier de chariot. Elle est liée de manière rotative à la barre de fixation 120 décrite ci-après en relation avec la figure 7. A cette fin, le bord supérieur 100 de la plaque 6 est muni de créneaux 101 alternant avec des encoches 102. Sur la figure, on voit que les créneaux et encoches sont disposés de part et d'autre de la partie médiane du bord 100. Chaque créneau est percé d'un trou 103, l'ensemble des trous étant aligné suivant une même génératrice. Deux tiges 104 adaptées au diamètre des trous 103 permettent de lier de chaque côté la plaque 6 à la barre 120. La plaque 6 présente au niveau de son bord inférieur 105 deux ergots 106 et 107 disposés symétriquement par rapport à la partie médiane qui sont destinés à coopérer en butée respectivement avec les encoches 71 et 72 de la plaque de fond de façon à limiter son débattement vers l'arrière. La figure 6 qui illustre une vue côté interne de panier montre encore que la plaque 6 est muni d'un crochet 108, de deux lumières 109, 110, et de moyens de fixation d'une plaque support escamotable, non représentée, par exemple pour bébé, montée de façon connue. Ceux-ci peuvent être constitués par des pattes de fixation 111 et 112 recevant chacune un doigt et d'un ensemble de créneaux 113 et d'encoches 114. Chaque créneau est percé d'un trou 115, l'ensemble des trous étant disposé sur une génératrice parallèle au bord 110. La plaque 6 peut également comprendre un certain nombre de lumières 116.

La barre de fixation 120 représentée sur la figure 7 permet de relier rigidement les deux flancs 2 et 3 au niveau des pattes 12. A cette fin, la barre 120 est munie à chaque extrémité d'un tenon 122 terminé par une collerette 124. La barre est munie encore de deux ensembles 125 et 126 de deux doigts 127 et 128 percés d'un trou 129, l'ensemble des trous 129 étant aligné sur la même génératrice et sont destinés à recevoir chacun une tige 104. A cette fin, les doigts 127, 128 sont engagés dans les encoches 102 de la plaque 6 selon la figure 6 pour constituer le moyen de fixation de la plaque 6 à la barre 120, tout en permettant sa rotation par rapport à ladite barre.

La figure 8 illustre le mode de liaison des barres de manoeuvre 14 et de liaison 120 à la patte 12 de chaque flanc 2 ou 3. La patte 12 qui prolonge chaque flanc comprend un premier bourrelet 130 présentant le logement 15 dont le fond est muni d'une rainure 131. L'ensemble logement 15 et rainure 131 est destiné à coopérer avec respectivement le tenon 122 et la collerette 124 de la barre 120. La patte 12 comporte enfin un second bourrelet 133 muni du logement 13 destiné à recevoir la barre 14 de manoeuvre du chariot 1. La liaison de la barre 120 avec la patte 12 peut être rendue inviolable en amenant le créneau 101 extrème en butée sur le bourrelet 130.

La figure 9 illustre le mode liaison de la plaque 80 au segment de pied 8. A cette fin, le pied 8 est muni d'un tenon 134 relié à une nervure 135 solidaire de la paroi 17. Ce tenon 134 coopère avec la mortaise 84 de la plaque 80 pour réaliser la fixation de l'ensemble. D'autres tenons sont bien entendu prévus pour coopérer avec les différentes mortaises 88 et 90 prévues de chaque côté de la plaque 80.

Comme mentionné précédemment, l'ensemble des éléments constitutifs du chariot 1 est réalisé par injection avec des matières synthétiques, tels les polyamides, les polycarbonates, du polypropylène, éventuellement chargés, à l'exclusion de tout usinage, de manière séparée, puis assemblés comme suit. Les flancs 2 et 3 qui sont des éléments les plus complexes à fabriquer le sont à l'aide d'un moule unique. La figure 9 montre encore la roue 136 fixée à son support 137 monté articulé, de manière connue, par rapport au segment de pied 8, par exemple à l'aide d'un système boulon-écrou non représenté.

On commence par engager la barre de manoeuvre 14 dans le logement 13 du flanc 2 , puis dans celui du flanc 3. On solidarise les flancs 2 et 3 avec l'embase 80 en engageant les tenons 134 dans les mortaises 84 correspondantes. Ensuite, on engage la plaque de fond 5 entre les flancs 2 et 3 en faisant correspondre les créneaux 25 des flancs avec les encoches 63 de ladite plaque, les crénaux 62 étant alors automatiquement engagés dans les encoches 26 des flancs. On fixe les flancs 2 et 3 au fond 5 en introduisant les tiges 68 et 69 dans les trous alignés 67. On termine l'assemblage du panier en présentant la plaque frontale 4 sur les flancs 2 et 3 de façon à introduire les créneaux 43 dans les encoches 24 des flancs, les créneaux 23 de chaque flanc étant alors engagés dans les encoches 44 de la plaque frontale et à engager la feuillure 66 dans la rainure 48. Les tiges 50 et 51 sont ensuite introduites dans les trous 49 alignés pour solidariser la plaque frontale avec les flancs. On termine l'assemblage du chariot par le montage de la barre de liaison 120. Pour cela, on engage les tenons 122 dans les logements 15 de chaque patte, la collerette 124 étant retenue dans la rainure 131. On monte enfin la plaque arrière 6 en engageant les doigts 127 de la barre 120 dans les encoches 102, puis en engageant de chaque côté les tiges 104 dans les trous 103 prévus à cet effet. Lorsque la plaque 6 est montée, le démontage du chariot devient impossible. En effet, le dernier créneau 101 forme un obstacle à l'arrachement, car il est en butée contre le bourrelet 130. La plaque arrière 6 peut donc se rabattre vers l'intérieur du panier sous l'action d'un autre chariot pour faciliter le rangement. Le débattement de la plaque 6 vers l'arrière est limité par les ergots 106 et 107 qui sont engagés en butée dans les encoches 71 et 72.

## Revendications

1. Chariot en matière synthétique comprenant deux flancs latéraux (2, 3) délimitant chacun d'une part une plaque latérale (7) prolongée par une patte (12) de réception d'une barre de manoeuvre (14), et d'autre part un segment de pied (8), le panier du chariot étant constitué par les plaques latérales (7), une plaque frontale (4), une plaque arrière (6) et un fond (5), les segments de pied (8) des deux flancs latéraux (2, 3) étant réunis par une plaque de jonction (80), caractérisé en ce qu'il comprend :
- des moyens d'assemblage du panier constitués par un ensemble de créneaux (23, 43 ; 25, 62) et d'encoches alternés (24, 44 ; 26, 63) pratiqués au niveau des rebords de jonction adjacents des plaques latérales (7) et de la plaque frontale (4), et des rebords de jonction adjacents du fond (S) et des plaques latérales (7), les créneaux de chaque rebord adjacent étant munis chacun d'un percement, et par une tige (50, 51, 68, 69) en matière synthétique introduite dans les percements des créneaux alignés des rebords adjacents desdites plaques (7), de la plaque frontale (4) et du fond (5),
- un moyen de liaison (120) entre les pattes (12) des flancs latéraux (2, 3),
- et un moyen de liaison (84, 88, 90 ; 134) entre les segments de pied (8) et la plaque de jonction (80).

2. Chariot en matière synthétique selon la revendication 1, caractérisé en ce que le fond (5) et la plaque frontale (4) sont reliés par un système constitué d'une feuillure (66) engagée dans une rainure (48).

3. Chariot en matière synthétique selon la revendication 2, caractérisé en ce que la feuillure (66) est solidaire du fond (5) et la rainure (48) solidaire de la plaque frontale (4).

4. Chariot en matière synthétique selon l'une des revendications 1 à 3, caractérisé en ce que les créneaux (23, 25, 43, 62) présentent une longueur équivalente à celle des encoches (24, 26, 44, 63).

5. Chariot en matière synthétique selon l'une quelconque des revendications précédentes, caractérisé en ce que le moyen de liaison entre les pattes (12) des flancs latéraux (2, 3) est constitué d'une barre de fixation (120) munie à chaque extrémité d'un tenon (122) portant une collerette (124) engagée dans un logement (15) pratiqué dans chaque patte (12).

6. Chariot en matière synthétique selon la revendication 5, caractérisé en ce que la plaque arrière (6) est montée rotative par rapport à la barre de fixation (120).

7. Chariot en matière synthétique selon la revendication 6, caractérisé en ce que la plaque arrière (6) est munie de deux ergots (106, 107) coopérant avec deux encoches (71, 72) pratiquées dans le fond (5) de façon à limiter son débattement vers l'arrière.

8. Chariot en matière synthétique selon l'une quelconque des revendications précédentes, caractérisé en ce que le moyen de liaison entre les segments de pied (8) et la plaque de jonction (80) est constitué par un ensemble de tenons (134) et de mortaises (84, 88, 90) disposés le long de leurs rebords de jonction.

9. Chariot en matière synthétique selon la revendication 8, caractérisé en ce que les mortaises (84, 88, 90) sont solidaires de la plaque de jonction (80), et les tenons (134) sont solidaires des segments de pied (8).

## Claims

1. A trolley made of a synthetic material comprising two lateral sides (2, 3) each marking out firstly a lateral plate (7) extended by a reception lug (12) for a manoeuvring bar (14), and secondly a foot segment (8), the basket of the trolley being formed by the side plates (7) themselves, a front plate (4), a rear plate (6) and a bottom (5), the foot segments (8) of the two lateral sides (2, 3) being brought together by a joining plate (80), characterised in that it comprises:
- means to assemble the basket formed by a crenellated assembly of alternate teeth (23, 43, 25, 62) and notches (24, 44, 26, 63) made on the joining rims adjacent to the lateral plates (7) and the front plate (4), and the joining rims adjacent to the bottom (5) and the lateral plates (7), the teeth of each adjacent rim being each provided with a hole, and by a rod ( 50, 51, 68, 69) made of synthetic material introduced into the holes in the aligned teeth of the adjacent rims of said plates (7), of the front plate (4) and the bottom (5)
- means (120) to link the lateral side (2, 3) lugs (12) together,
- and means (84, 88, 90, 134) to connect the foot segments (8) to the joining plate (80).

2. A trolley made of synthetic material according to Claim 1, characterised in that the bottom (5) and the front plate (4) are connected by a system formed of a rabbet (66) engaged in a groove (48).

3. A trolley made of synthetic material according to Claim 2, characterised in that the rabbet (66) is integral with the bottom (5) and the groove (48) integral with the front plate (4).

4. A trolley made of synthetic material according to one of Claims 1 to 3, characterised in that the teeth (23, 25, 43, 62) are of a length equivalent to that of the notches (24, 26, 44, 63).

5. A trolley made of synthetic material according to any one of the above Claims, characterised in that the means to link the lugs (12) of the lateral sides (2, 3) are formed of a fastening bar (120) fitted at each end with a tenon (122) carrying a collar (124) engaged in a housing (15) made in each lug (12).

6. A trolley made of synthetic material according to Claim 5, characterised in that the rear plate (6) is mounted rotating with respect to the fastening bar (120).

7. A trolley made of synthetic material according to Claim 6, characterised in that the rear plate (6) is fitted with two snugs (106, 107) co-operating with two notches (71, 72) made in the bottom (5) to limit its range of movement to the rear .

8. A trolley made of synthetic material according to any one of the above Claims, characterised in that the means to link the foot segments (8) to the joining plate (80) are formed by an assembly of tenons (134) and slots (84, 88, 90) arranged along their joining rims.

9. A trolley made of synthetic material according to Claim 8, characterised in that the slots (84, 88, 90) are integral with the joining plate (80), and the tenons (134) are integral with the foot segments (8).

## Patentansprüche

1. Einkaufswagen aus synthetischem Material, bestehend aus zwei Seitenflächen (2, 3), von denen eine jede aus einem Seitenteil (7) mit einem Ansatz (12) zur Aufnahme einer Handleiste (14) sowie einem Fußsegment (8), dem Korb mit Seitenteilen (7), einer vorderen (4) und hinteren (6) Begrenzung und einem Boden (5) besteht, wobei die Fußsegmente (8) und die beiden Seitenflächen (2, 3) durch eine Grundplatte (80) zusammengehalten werden, dadurch gekennzeichnet, dass:
- Vorrichtungen für die Montage des Korbes, bestehend aus alternierend angebrachten Scharten (23, 43; 25, 62) und Kerben (24, 44; 26, 63) an den zu montierenden Rändern von Seitenteilen (7) und vorderer Begrenzung (4) und Boden (5) und Seitenteilen (7), wobei die an den Rändern aufgereihten Scharten durchbohrt sind, und einem Stift (50, 51, 68, 69) aus synthetischem Material, der in diese durchbohrten Scharten an den Rändern der erwähnten Seitenteile (7), des Vorderteils (4) und des Bodens (5) gesteckt wird;
- eine Querverstrebung (120) zwischen Ansätzen (12) und Seitenflächen (2, 3);
- und einer Steckvorrichtung (84, 88, 90; 134) zum Zusammenhalt von Fußsegmenten (8) und Grundplatte (80).

2. Einkaufswagen aus synthetischem Material nach Anspruch 1, dadurch gekennzeichnet, daß der Boden (5) und die vordere Begrenzung (4) durch einen in eine Nut (48) eingeführten Falz (66) verbunden werden.

3. Einkaufswagen aus synthetischem Material nach Anspruch 2, dadurch gekennzeichnet, daß der Falz (66) Bestandteil des Bodens (5) und die Nut (48) Bestandteil der vorderen Begrenzung (4) ist.

4. Einkaufswagen aus synthetischem Material nach einem der Ansprüche 1 bis 3, dadurch gekennzeichnet, daß die Scharten (23, 25, 43, 62) die gleiche Abmessung wie die Kerben (24, 26, 44, 63) aufweisen.

5. Einkaufswagen aus synthetischem Material nach einem der vorgenannten Ansprüche, dadurch gekennzeichnet, daß die Verbindung zwischen den Ansätzen (12) der Seitenflächen (2, 3) eine Querverstrebung (120) ist, deren Enden einen Zapfen (122) mit durchgezogenem Kragen (124) bilden, der in die Aussparung (15) jedes Ansatzes (12) eingeführt wird.

6. Einkaufswagen aus synthetischem Material nach Anspruch 5, dadurch gekennzeichnet, daß die an der Querverstrebung (120) montierte hintere Begrenzung (6) nach innen aufgeklappt werden kann.

7. Einkaufswagen aus synthetischem Material nach Anspruch 6, dadurch gekennzeichnet, daß an der hinteren Begrenzung (6) zwei Nasen (106, 107) angebracht sind, die in zwei Kerben (71, 72) am Korbboden (5) greifen und so ein Aufklappen nach außen verhindern.

8. Einkaufswagen aus synthetischem Material nach einem der vorgenannten Ansprüche, dadurch gekennzeichnet, daß der Zusammenhalt zwischen den Fußsegmenten (8) und der Grundplatte (80) durch entlang ihrer zu montierenden Ränder angebrachte Zapfen (134) und Steckvorrichtungen (84, 88, 90) gewährleistet ist.

9. Einkaufswagen aus synthetischem Material nach Anspruch 8, dadurch gekennzeichnet, daß die Steckvorrichtungen (84, 88, 90) Bestandteil der Grundplatte (80) und die Zapfen (134) Bestandteil der Fußsegmente (8) sind.
